# EUROPÄISCHE PATENTSCHRIFT

(11) **EP 4 110 583 B1**
(45) Veröffentlichungstag und Bekanntmachung des Hinweises auf die Patenterteilung: **09.10.2024**
(21) Anmeldenummer: 21706512.7
(22) Anmeldetag: 15.02.2021
(51) Int. Cl.: B29C 48/00, B29C 48/02, B29C 48/28, B29C 48/285, B29C 48/50, B29C 48/92, A23P 30/20, A21C 11/16, A23L 7/117, B29B 7/60, A21C 11/00

(54) **VERFAHREN ZUR HERSTELLUNG EINES LEBENSMITTELPRODUKTS**
METHOD FOR PRODUCING A FOOD PRODUCT
PROCÉDÉ POUR PRODUIRE UN PRODUIT ALIMENTAIRE

(30) Priorität: 27.02.2020 DE 102020105228
(43) Veröffentlichungstag der Anmeldung: 04.01.2023
(73) Patentinhaber: Hebenstreit GmbH, 64546 Mörfelden-Walldorf (DE)
(72) Erfinder: DUSCHKA, Friedrich, 01139 Dresden (DE); FÖRSTER, Ralph Olaf, 01108 Dresden (DE); MERFORTH, Egbert, 01099 Dresden (DE); ENGELMANN, Michael, 65474 Bischofsheim (DE); ROLF-WITTLAKE, Antonius, 26169 Friesoythe-Thüle (DE)
(74) Vertreter: Habermann Intellectual Property Partnerschaft von Patentanwälten mbB
(86) Internationale Anmeldenummer: PCT/EP2021/053664
(87) Internationale Veröffentlichungsnummer: WO 2021/170445

(56) Entgegenhaltungen:
- EP-A1- 0 888 857
- EP-B1- 1 608 235
- DE-A1- 3 636 867
- DE-A1- 4 410 932
- DE-B- 1 055 423
- DE-C1- 3 529 523
- DE-T2- 69 925 708

## Beschreibung

Die vorliegende Erfindung betrifft ein Verfahren zur Verarbeitung einer Rohstoffmischung in einer Extrusionsmaschine zur Herstellung eines Lebensmittelprodukts, wobei die Rohstoffmischung mit einer beweglichen Zuführeinrichtung der Extrusionsmaschine zugeführt wird, wobei durch eine Stellbewegung eines Zuführkanalabschnitts und/oder eines Einfülltrichters der Zuführeinrichtung die Rohstoffmischung an unterschiedlichen Einfüllpositionen innerhalb einer Zuführöffnung einstellbar ist.

Es ist bekannt, Extrusionsprozesse in der Lebensmittelproduktion für die Produktion von Teigwaren, Snackwaren oder für die Herstellung von Frühstückscerealien zu nutzen. Der Extrusionsprozess wird mittels einer Extrusionsmaschine, die beispielsweise als Einschnecken-Extrusionsmaschine oder als Zweischnecken-Extrusionsmaschine ausgeführt sein kann, durchgeführt. Dabei wird unter Einfluss von Druck und Temperatur der zu verarbeitende Rohstoff oder die Rohstoffmischung durch eine definierte Öffnung, beispielsweise eine Düse gepresst und das erstarrte Extrudat am Ausgang der Düse mithilfe einer Schneidevorrichtung in Form gebracht. Während des Extrusionsprozesses erfährt der zu verarbeitende Rohstoff eine chemische bzw. physikalische Modifikation, wodurch die Extrudateigenschaften bzw. die Eigenschaften des Produkts eingestellt werden können. Die Extrudateigenschaften, wie beispielweise eine Textur, eine Dichte, ein Feuchtegehalt oder eine Porigkeit werden sowohl von den Rohstoffeigenschaften als auch von den Extrusionsparametern, wie beispielsweise ein Aufbau und eine Art des Extruders, eine Schneckendrehzahl, ein Eintrag von thermischer und mechanischer Energie, ein Durchmesser und eine Art der Düse bestimmt. Um ein Extrudat mit einer gleichbleibenden Konsistenz und Zusammensetzung zu erhalten, sollten die Rohstoffe der Rohstoffmischung möglichst gleichmäßig der Extrusionsmaschine zugeführt werden. Um die Rohstoffe gleichmäßig der Extrusionsmaschine zuführen zu können, müssen die Rohstoffe bestimmte Rohstoffeigenschaften, insbesondere eine gute Fließfähigkeit oder eine gute Rieselfähigkeit aufweisen. Um die Rohstoffeigenschaften im Hinblick auf eine gute Fließfähigkeit oder eine gute Rieselfähigkeit einzustellen, sind je nach Rohstoff einige Vorbereitungsschritte notwendig. Ein Rohstoff kann auch beispielsweise in einem pulverförmigen, mehlförmigen oder griesförmigen Zustand vorliegen und erst durch eine Hinzugabe von Wasser oder einem anderen geeigneten flüssigen Bindemittel zu einem extrudierbaren Rohstoff verarbeitet werden. Die Flüssigkeit kann dabei dem Rohstoff vorab zugefügt und der extrudierbare Rohstoff der Extrusionsmaschine zugeführt werden. Es ist auch möglich und praktikabel, den noch nicht extrudierbaren Rohstoff einerseits und gesondert dazu die Flüssigkeit der Extrusionsmaschine zuzuführen, um in der Extrusionsmaschine eine extrudierbare Rohstoffmischung herzustellen.

In EP 0 888 857 A1 ist eine Vorrichtung zum Zuführen einer Rohstoffmenge in eine Extrusionsmaschine offenbart, bei welcher der Einfülltrichter beispielsweise zu Wartungs- oder Reinigungszwecken relativ zu der Förderschnecke verlagerbar ist. Im Hinblick auf die Betriebssicherheit kann durch einen Signalgeber in Abhängigkeit von der Position des Einfülltrichters der Antrieb der Förderschnecke abgeschaltet, bzw. eingeschaltet werden.

Beispielsweise aus DE 44 10 932 A1 oder DE 35 29 523 C1 sind Vorrichtungen zum Zuführen einer Rohstoffmenge in eine Extrusionsmaschine bekannt, bei denen der Einfülltrichter relativ zu einer Förderschnecke verlagert werden kann, um einen unterschiedlichen Materialzulauf zu ermöglichen. Auf diese Weise kann entweder gemäß DE 44 10 932 A1 durch eine Verlagerung des Einfülltrichters relativ zu der entlang der Förderschnecke unterschiedlich vorgegebenen Steigung der Schneckengänge oder aber durch konische Nuten in einer die Förderschnecke umgebenden Nutbüchse gemäß DE 35 29 523 C1 ein unterschiedlicher Materialzulauf vorgegeben werden.

Aus DE 699 25 708 T2 ist ein Nahrungsmittelprodukt mit Ballaststoffergänzung bekannt, welches überwiegend aus einem gegarten Getreideteig besteht. Das Nahrungsmittelprodukt kann mit einer Extrusionsmaschine hergestellt werden. Ein weiteres Verfahren zur Herstellung synergistischer hypoglykämischer Nahrungsmittel ist beispielsweise in EP 1 608 235 B1 beschrieben.

Bei der Verarbeitung eines Vollkorngetreidemehls oder -schrots entstehen Rohstoffmischungen mit einem hohen Faseranteil aufgrund der enthaltenen Hüllenbestandteile des Getreidekorns. Ein hoher Anteil von Fasern innerhalb einer Rohstoffmischung kann zu einer schlechten Fließfähigkeit oder zu einer schlechten Rieselfähigkeit der Rohstoffmischung führen, wodurch die Rohstoffmischung nur schwer förderbar ist und die Gefahr einer Brückenbildung innerhalb der Zuführeinrichtung besteht. Durch eine solche Brückenbildung kann die Zuführeinrichtung verstopfen, sodass keine weitere Zuführung einer Rohstoffmenge in die Extrusionsmaschine möglich ist. Die Ursache für die Brückenbildung bei feinkörnigen Rohstoffmengen, beispielsweise bei feinkörnigem, kohäsivem Rohstoffpartikeln, sind die Haftkräfte zwischen den einzelnen Rohstoffpartikeln. Bei grobkörnigen Rohstoffen ist die Ursache für die Brückenbildung ein Verkeilen der Rohstoffpartikel. Somit entsteht bei der Brückenbildung und einer weiteren Zuführung einer Rohstoffmenge im Bereich der Brücke ein Rohstoffmengenüberschuss, der zu einer Verstopfung der Zuführeinrichtung führt. Je nach Beschaffenheit der Rohstoffmenge und der Ausgestaltung der Zuführeinrichtung können sich die Brücken wieder auflösen und eine weitere Zuführung der Rohstoffmenge in die Extrusionsmaschine bewirken, wodurch ungünstigerweise eine unregelmäßige Zuführung der Rohstoffmenge in die Extrusionsmaschine entsteht und eine gleichbleibende Konsistenz und Zusammensetzung des Extrudats nicht sichergestellt werden kann. Derartige Rohstoffmengen, bei deren Zuführung eine hohe Gefahr der Brückenbildung besteht, werden als schlecht fließfähig und damit schwer förderbar angesehen.

Aus Lebensmittelproduktionen sind hochwertige Prozessnebenprodukte wie Presskuchen oder Filterkuchen bekannt. Presskuchen, auch als Trester bezeichnet, sind Lebensmittelrückstände, die nach dem Auspressen des Saftes von Obst, Gemüse oder Pflanzenbestandteilen übrig bleiben. Die Presskuchen werden bekannterweise in der Nahrungsmittelindustrie zur Spirituosenherstellung, in der Futtermittelindustrie als Futtermittel oder zu einer energetischen Nutzung für die Energiegewinnung mittels Biogasanlagen verwendet. Derartige Presskuchen und Filterkuchen verfügen über hochwertige Obst-, Gemüse- oder Pflanzenbestandteile, jedoch ist eine direkte Weiterverarbeitung der Presskuchen und Filterkuchen zu Lebensmittelprodukten in der Regel nicht vorgesehen. Eine Weiterverarbeitung der Presskuchen ist teilweise ausschließlich nach einer zeit-, energie- und damit kostenaufwändigen Trocknung möglich. Daher werden die Prozessnebenprodukte häufig nicht weiterverwendet, sondern entsorgt.

Als Aufgabe der vorliegenden Erfindung wird es angesehen, ein Verfahren bereitzustellen, um eine Rohstoffmischung, die ein Prozessnebenprodukt eines Lebensmittelherstellungsprozesses mit einem hohen Anteil an Fasern aufweist, in einer Extrusionsmaschine zu einem Lebensmittelprodukt verarbeiten zu können, wobei eine möglichst gleichmäßige Zuführung der Rohstoffmischung bewirkt werden soll.

Diese Aufgabe wird erfindungsgemäß durch ein Verfahren nach Anspruch 1 gelöst, mit welchem die Rohstoffmischung mit einer bewegten Zuführeinrichtung (1) der Extrusionsmaschine zugeführt wird, sodass die Rohstoffmischung mittels der beweglichen Zuführeinrichtung förderbar gemacht wird und gleichmäßig in die Extrusionsmaschine zugeführt werden kann, wodurch eine gleichbleibende Konsistenz und Zusammensetzung des Extrudats sichergestellt werden kann, wodurch eine besonders gleichmäßige Zuführung der Rohstoffmenge in die Extrusionsmaschine möglich ist, sodass die Rohstoffmischung mittels der Extrusionsmaschine verarbeitbar ist, und dass die Rohstoffmischung einen Faserrohstoff und einen Trägerrohstoff aufweist, wobei der Faserrohstoff ein Prozessnebenprodukt eines Lebensmittelherstellungsprozesses aufweist, und wobei der Trägerrohstoff Bestandteile eines Vollkorngetreides aufweist.

Dadurch, dass mittels der Stelleinrichtung unterschiedliche Bewegungsformen und Bewegungsgeschwindigkeiten, wie beispielweise kreisförmige, zickzack-förmige, schnelle oder langsame Bewegungen erzeugt werden können, können besonders vorteilhaft die schlecht fließfähigen und schlecht förderbaren Rohstoffmischungen zum Fließen angeregt werden. Durch eine hohe Fließfähigkeit und eine gute Förderbarkeit der Rohstoffmischung kann die Brückenbildung besonders vorteilhaft vermieden werden, sodass die Rohstoffmischung mittels der beweglichen Zuführeinrichtung förderbar gemacht wird und gleichmäßig in die Extrusionsmaschine zugeführt werden kann, wodurch vorteilhafterweise eine gleichbleibende Konsistenz und Zusammensetzung des Extrudats sichergestellt werden kann.

Prozessnebenprodukte aus beispielweise einem Saftherstellungsprozess sind Presskuchen und Filterkuchen, die Schale, Fruchtfleisch, Kerne und Restsaft von Beeren oder Trauben beinhalten. Durch die Weiterverarbeitung der Prozessnebenprodukte kann die Menge an als Abfall zu entsorgenden Nebenprodukten aus Lebensmittelherstellungsprozessen in vorteilhafterweise reduziert werden. Es versteht sich, dass ein Vollkorngetreidemehl sämtliche Bestandteile des Vollkorngetreides wie beispielsweise eine Kleie, einen Keimling und ein Endosperm aufweist. Durch die Verarbeitung des Vollkorngetreidemehls zu einem Trägerstoff können besonders vorteilhaft vorgelagerte Trennungsprozesse zur Trennung der Kleie von den anderen Bestandteilen des Vollkorns eingespart werden, wodurch eine besonders wirtschaftliche Lebensmittelherstellung ermöglicht wird. Durch die Verarbeitung des vollen Korns inklusive des Keims, des Endosperms und insbesondere inklusive der ballaststoffreichen Hülle lässt sich besonders vorteilhaft ein ballaststoffreiches Lebensmittelprodukt herstellen. Aufgrund der besonders vorteilhaften nutritiven Eigenschaften der ballaststoffreichen Lebensmittelprodukte lassen sich zucker- und fettarme und damit gesundheitsförderliche Lebensmittelprodukte herstellen. Durch die Verwendung des Extrusionsprozesses zur Verarbeitung von Nebenprodukten aus Lebensmittelverarbeitungsverfahren lassen sich diverse Produktformen und damit gänzlich neue Lebensmittelprodukte aus den hochwertigen Bestandteilen der Prozessnebenprodukte gestalten und herstellen. Beispielsweise können als Ersatz für Knabberwaren, wie zum Beispiel Kartoffelchips oder Erdnussflips neuartige extrudierte Snacks geschaffen werden, wie Flips, Ringe und beliebige andere extrudierbare Formen, oder aber Produkte für eine Zwischenmahlzeit, wie Riegel, die als Ersatz oder Ergänzung für den Verzehr von Obst oder Gemüse dienen können, hergestellt werden.

Vorteilhafterweise ist erfindungsgemäß vorgesehen, dass die Rohstoffmischung 5 Gew.-% bis 80 Gew.-% Faserrohstoff und 1 Gew.-% bis 95 Gew.-% Trägerrohstoff aufweist. Die Eigenschaften des extrudierten Lebensmittelprodukts, wie beispielsweise die Textur, die Dichte und die Porigkeit werden durch die Rohstoffeigenschaften, durch die Extrusionsparameter und/oder aber durch die Rezeptur der Rohstoffmischung bestimmt. Ein hoher Anteil an Faserrohstoffen im Bereich von 40 Gew.-% bis 80 Gew.-% innerhalb der Rohstoffmischung führt zu einem härteren und feinporigen Extrudat. Ein hoher Anteil an Trägerrohstoffen im Bereich von 50 Gew.-% bis 95 Gew.-% führt zu einer größeren Expansion des Extrudats und damit zu großen Poren. Somit lassen sich durch eine Veränderung der Zusammensetzung der Rohstoffmischung besonders vorteilhaft die Extrudateigenschaften und damit die Eigenschaften des extrudierten Lebensmittelprodukts beeinflussen.

In vorteilhafter Weise ist es optional möglich, dass der Anteil des Prozessnebenprodukts an dem Faserrohstoff 1 Gew.-% bis 100 Gew.-% beträgt, wodurch die Extrudateigenschaften besonders vorteilhaft durch die Zusammensetzung der Rohstoffmischung eingestellt werden können. Durch einen hohen Anteil des Prozessnebenprodukts an dem Faserrohstoff im Bereich von 60 Gew.-% bis 100 Gew.-% kann ein besonders hoher Grad der Wiederverwendung des Prozessnebenprodukts innerhalb der Rohstoffmischung erfolgen. Damit ist eine besonders wirtschaftliche Lebensmittelproduktherstellung möglich. Durch einen hohen Anteil des Prozessnebenprodukts an dem Faserrohstoff kann der Anteil an Fasern innerhalb der Rohstoffmischung gesteigert werden, wodurch ein besonders ballaststoffreiches Extrudat und Lebensmittelprodukt hergestellt werden kann. Bei einem geringen Anteil des Prozessnebenprodukts an dem Faserrohstoff im Bereich von 1 Gew.-% bis 40 Gew.-% und bei gleichzeitig gesteigertem Anteil des Trägerrohstoffs in der Rohstoffmischung kann ein Extrudat und Lebensmittelprodukt mit größeren Poren und damit mit geringerer Dichte hergestellt werden.

Eine vorteilhafte Umsetzung des Erfindungsgedankens sieht optional vor, dass das Prozessnebenprodukt pflanzliche Rohstoffe aus Presskuchen, Filterkuchen, Schalen und/oder Treber aufweist.

Die Prozessnebenprodukte, die beispielsweise aus einem Saftherstellungsprozess anfallen, sind beispielsweise Presskuchen und Filterkuchen, die Schalen, Fruchtfleisch, Kerne und Restsaft von Beeren oder Trauben beinhalten. Innerhalb dieser Presskuchen sind eine Vielzahl wertvoller Inhaltsstoffe, wie Vitamine und Ballaststoffe enthalten, die erst durch die Weiterverarbeitung zu einem besonders vitamin- und ballaststoffreichem Lebensmittelprodukt verwertet werden. Presskuchen können beispielsweise bei Saftherstellern, Keltereien oder obstverarbeitenden Betrieben anfallen und unterschiedliche Beeren- oder Obstsorten, wie beispielsweise Stein- oder Beerenobst, Apfel, Kirsche, Holunder, Birne, Rhabarber oder Johannisbeeren enthalten. Ebenso sind Rohstoffmischungen mit Bestandteilen wie beispielsweise Biertreber, Weintraubentrester oder Gemüseschalen, die in Brauereien, Winzerbetrieben oder gemüseverarbeitenden Betrieben anfallen, möglich. Durch die Weiterverarbeitbarkeit der Presskuchen oder Filterkuchen aus unterschiedlichen Beeren- und Obstsorten innerhalb des Extrusionsprozesses ist die Herstellung einer Vielzahl unterschiedlicher und für die menschliche Ernährung wertvoller Lebensmittelprodukte möglich.

Vorteilhafterweise ist erfindungsgemäß vorgesehen, dass das Prozessnebenprodukt 5 Gew.-% bis 20 Gew.-% Wasser aufweist. Für den Extrusionsprozess werden typischerweise aber nicht ausschließlich Feuchtegehalte der Rohstoffmischungen im Bereich von 15 Gew.-% bis 20 Gew.-% eingestellt, sodass eine direkte Weiterverarbeitung der Prozessnebenprodukte innerhalb der Rohstoffmischung mittels eines Extrusionsprozesses möglich ist. Außerdem ist durch einen Feuchtegehalt im Bereich von 5 Gew.-% bis 20 Gew.-% eine gute mikrobiologische Stabilität des Prozessnebenprodukts hergestellt. Bei einem Feuchtegehalt des Prozessnebenprodukts im Bereich von 5 Gew.-% bis 20 Gew.-% kann für die Weiterverarbeitung des Prozessnebenprodukts im Extrusionsprozess auf eine Hinzugabe von zusätzlichem Wasser oder eine zeit- und energieintensive Trocknung der Rohstoffmischung zur Reduzierung des Wassergehalts innerhalb der Rohstoffmischung verzichtet werden.

In vorteilhafter Weise ist es möglich, dass das Vollkorngetreide ausgewählt ist aus Mais, Reis, Weizen, Gerste, Roggen, Hafer oder einer Kombination daraus, wodurch eine Herstellung einer großen Vielfalt an unterschiedlichen extrudierten Lebensmittelprodukten möglich ist. Durch den hohen Anteil an Ballaststoffen, Mineralstoffen und Vitaminen innerhalb der Vollkorngetreide sind für die menschliche Ernährung wertvolle Lebensmittelprodukte herstellbar. Aufgrund der hohen Verfügbarkeit der Rohstoffe können die extrudieren Lebensmittelprodukte auch in großen Mengen zu wirtschaftlichen Bedingungen hergestellt werden.

Eine vorteilhafte Umsetzung des Erfindungsgedankens sieht optional vor, dass die Rohstoffmischung mindestens eine weitere Komponente aufweist, wodurch die Zusammensetzung der Rohstoffmischung variiert werden kann. Durch die Einstellung der Zusammensetzung der Rohstoffmischung können die Eigenschaften des Extrudats und des Lebensmittelprodukts besonders vorteilhaft eingestellt werden. Ebenso ist die Hinzugabe der weiteren Komponente in einer geringen Menge in die Rohstoffmischung denkbar, wobei die weitere Komponente ein Gewürz oder ein Aroma aufweisen kann. Durch die Hinzugabe der weiteren Komponente kann die Vielfalt an möglichen Rohstoffmischungen und damit hochwertigen Lebensmittelprodukten vorteilhaft gesteigert werden.

Vorteilhafterweise ist vorgesehen, dass die weitere Komponente ausgewählt ist aus Wasser, Süßungsmitteln, wie Zucker, Zuckeralkohole und Süßstoffe, Kochsalz, Fetten und Ölen, funktionellen Inhaltsstoffen, wie beispielsweise Vitamine, Mineralstoffe, ungesättigte Fettsäuren und Bakterienkulturen, Aromen und Kombinationen daraus. Derartige weitere Komponenten dienen der Veredelung der extrudierten Lebensmittelprodukte, wodurch beispielsweise Geschmack oder Farbgebung, Konsistenz und Nährwert vorteilhaft beeinflusst werden können. Damit lassen sich besonders schmackhafte und optisch ansprechende Lebensmittelprodukte mit hohem Nährwert herstellen.

Es hat sich gezeigt, dass es mit dem erfindungsgemäßen Verfahren möglich ist, nahezu alle relevanten Rohstoffmischungen, die der Extrusionsmaschine zugeführt werden, mit einer Einschneckenextrusionsvorrichtung zu extrudieren. Durch die erfindungsgemäße Ausgestaltung und Ansteuerung der Zuführeinrichtung können eine unerwünschte Brückenbildung oder eine ungleichmäßige Beladung der Extrusionsvorrichtung vermieden werden. Zudem kann die erfindungsgemäße Rohstoffmischung ohne weiteres in einer Einschneckenextrusionsvorrichtung verarbeitet und damit extrudiert werden, ohne dass beispielsweise ein Verklumpen einzelner Komponenten oder der extrudierbaren Rohstoffmischung befürchtet werden muss. Die Verwendung einer Einschneckenextrusionsvorrichtung hat gegenüber der ansonsten üblichen Verwendung einer Zweischneckenextrusionsvorrichtung erhebliche Vorteile, beispielsweise hinsichtlich der für die Herstellung und den Betrieb der Extrusionsvorrichtung deutlich geringer anfallenden Kosten.

Allgemein aus der Praxis bekannt werden derartige Zuführeinrichtungen in der lebensmittelproduzierenden Industrie eingesetzt, um Extrusionsmaschinen, die zur Herstellung von Snacks oder Teigwaren genutzt werden, mit Rohstoffmengen zu beschicken. Da ein Extrusionsprozess kontinuierlich abläuft und kontinuierlicherweise ein Extrudat erzeugt, ist auch eine kontinuierliche und insbesondere gleichmäßige Beschickung der Extrusionsmaschine mit einer Rohstoffmenge notwendig.

Aus dem Stand der Technik sind Zuführeinrichtungen für Extrusionsmaschinen bekannt, in denen die Rohstoffmenge durch eine Zuführöffnung der Extrusionsmaschine zugeführt wird, wobei die Zuführung der Rohstoffmenge schwerkraftunterstützt von oben in die Zuführöffnung der Extrusionsmaschine erfolgt. Mittels einer Extrusionsmaschine werden bekannterweise auch Rohstoffmischungen verarbeitet, die aus einzelnen Rohstoffen mit unterschiedlichen Eigenschaften zusammengesetzt sind. Dabei wird beispielsweise ein fließfähiges Material extrudiert und diesem über einen Einfülltrichter zusätzliche Additive zugeführt. Diese Additive werden oftmals aus Vorratsbehältern entnommen und dem Einfülltrichter der Zuführeinrichtung zugeführt. Häufig erfolgt die Zuführung der Additive schwerkraftunterstützt durch ein Herabrieseln von oben in den darunter angeordneten Einfülltrichter. Um ein Extrudat mit einer gleichbleibenden Konsistenz und Zusammensetzung zu erhalten, sollten die Additive möglichst gleichmäßig der Extrusionsmaschine zugeführt werden.

Die Additive können beispielsweise aus einem Rohstoff mit einem hohen Anteil von Fasern bestehen und in einem getrockneten Zustand eine rieselfähige Rohstoffmischung bilden. Bekannterweise sind Rohstoffmischungen mit einem hohen Anteil an Fasern schlecht fließfähig und schwer förderbar, wodurch eine Gefahr einer Brückenbildung innerhalb der Zuführeinrichtung entstehen kann. Durch die Brückenbildung kann die Zuführeinrichtung verstopfen, sodass keine weitere Zuführung der Rohstoffmenge in die Extrusionsmaschine möglich ist. Die Ursache für die Brückenbildung sind bei feinkörnigen Rohstoffmengen, beispielsweise bei feinkörnigem, kohäsivem Rohstoffpartikeln, die Haftkräfte zwischen den einzelnen Rohstoffpartikeln. Bei grobkörnigen Rohstoffmengen ist die Ursache für die Brückenbildung ein Verkeilen der Rohstoffpartikel. Somit entsteht bei der Brückenbildung und einer weiteren Zuführung einer Rohstoffmenge im Bereich der Brücke ein Rohstoffmengenüberschuss, der zu einer Verstopfung der Zuführöffnung der Zuführeinrichtung führt. Je nach Beschaffenheit der Rohstoffmenge und der Ausgestaltung der Zuführeinrichtung können sich die Brücken wieder auflösen und eine weitere Zuführung der Rohstoffmenge in die Extrusionsmaschine bewirken, wodurch ungünstigerweise eine unregelmäßige Zuführung der Rohstoffmenge in die Extrusionsmaschine entsteht. Derartige Rohstoffmengen, bei deren Zuführung eine hohe Gefahr der Brückenbildung besteht, werden als schlecht fließfähig und damit schwer förderbar angesehen. Der Aufwand für eine kontrollierte und gleichmäßige Zuführung von schlecht fließenden und schwer förderbaren Rohstoffen ist oftmals erheblich.

Um zu ermöglichen, dass die Zuführung der Rohstoffmenge ohne Brückenbildung und damit zuverlässig und kontinuierlich möglich ist, ist eine optionale Ausgestaltung des Verfahrens vorgesehen, bei welchem die Trajektorie der Rohstoffmenge veränderbar ist, sodass ein Trajektoriendurchtrittswinkel, unter welchem die Trajektorie durch die Zuführöffnung verläuft und/oder eine Trajektoriendurchtrittsposition, in welcher die Trajektorie durch die Zuführöffnung verläuft, veränderbar ist, wodurch die Rohstoffmenge während der Zuführung in die Extrusionsmaschine an unterschiedliche Einfüllpositionen innerhalb der Zuführöffnung verteilbar ist.

Die Trajektorie der Rohstoffmenge ist derartig veränderbar, sodass die Rohstoffzuführung beispielsweise seitlich und in einer parabelförmigen Trajektorie der Zuführöffnung zugeführt werden kann. Allein durch die Änderung des Trajektoriendurchtrittswinkels kann eine lokale Verlagerung der Rohstoffmenge bewirkt werden, sodass eine Brückenbildung und damit ein lokaler Rohstoffmengenüberschuss vermeidbar sind.

Vorteilhafterweise kann eine Rohstoffzuführung schwerkraftunterstützt von oben in die Zuführöffnung erfolgen. Um bei einer derartigen senkrecht eintretenden Rohstoffzuführung vorteilhafterweise eine lokale Verlagerung der Rohstoffmenge innerhalb der Zuführöffnung zu erreichen, kann dies allein durch eine Änderung der Trajektoriendurchtrittsposition erreicht werden.

Vorteilhafterweise ist somit die Brückenbildung vermeidbar, sodass eine kontinuierliche und gleichmäßige Zuführung der Rohstoffmenge in die Extrusionsmaschine möglich ist.

Vorteilhafterweise ist vorgesehen, dass der Trajektoriendurchtrittswinkel und die Trajektoriendurchtrittsposition kontinuierlich und/oder diskontinuierlich während der Zuführung der Rohstoffmenge durch die Zuführöffnung veränderbar sind, wodurch vorteilhafterweise unterschiedliche und an die jeweiligen Rohstoffeigenschaften angepasste Stellbewegungen einstellbar sind. Die Zuführung der Rohstoffmenge kann während einer kontinuierlichen Änderung der Trajektoriendurchtrittsposition erfolgen, wobei die Trajektoriendurchtrittsposition beispielsweise und vorteilhafterweise in kreisförmigen Stellbewegungen entlang einem dem Durchmesser der Zuführöffnung nach innen versetztem Pfad folgend ausgeführt wird. Denkbar sind aber auch Änderungen der Trajektoriendurchtrittsposition in langsamen oder in schnellen Stellbewegungen oder in oszillierenden und richtungsändernden Stellbewegungen. Dadurch ist die zugeführte Rohstoffmenge kontinuierlich und besonders gleichmäßig innerhalb der Zuführöffnung verteilbar. Durch eine diskontinuierliche Änderung des Trajektoriendurchtrittswinkels und der Trajektoriendurchtrittsposition zu diskreten Zeitpunkten ist eine derartige Zuführung der Rohstoffmenge einstellbar, wodurch besonders vorteilhaft die Brückenbildung der Rohstoffmenge vermeidbar ist. Diskontinuierliche Änderungen des Trajektoriendurchtrittswinkels und der Trajektoriendurchtrittsposition lassen sich außerdem besonders einfach realisieren.

In vorteilhafter Weise ist es optional möglich, dass eine Änderung des Trajektoriendurchtrittswinkels und eine Änderung der Trajektoriendurchtrittsposition in unterschiedlichen Geschwindigkeiten durchführbar sind. Bei hohen Geschwindigkeiten, in der die Änderung des Trajektoriendurchtrittswinkels und die Änderung der Trajektoriendurchtrittsposition stattfindet, können besonders vorteilhaft die schlecht fließfähigen und schlecht förderbaren Rohstoffe zum Fließen angeregt werden. Durch eine hohe Fließfähigkeit und eine gute Förderbarkeit der Rohstoffmenge kann die Brückenbildung besonders vorteilhaft vermieden werden, sodass diese mittels der Zuführeinrichtung förderbar werden.

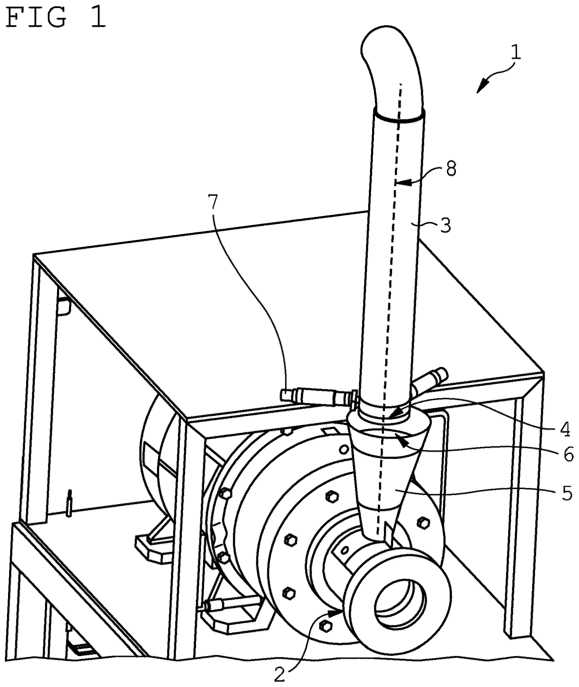

Nachfolgend werden beispielhafte Ausgestaltungen der Erfindungsgedanken näher erläutert. Eine bespielhafte Ausführung des Verfahrens zur Zuführung der Rohstoffmischung in die Extrusionsmaschine ist im nachstehenden Ausführungsbeispiel erläutert. Die Ausgestaltung der Zuführeinrichtung ist in der Zeichnung in Figur 1 schematisch dargestellt.

### Ausführungsbeispiel

Eine Rohstoffmischung wird in einem Rohstoffmischer zu einer rieselfähigen Rohstoffmischung verarbeitet. Die Rohstoffmischung besteht aus einem Faserrohstoff und aus einem Trägerrohstoff. Der Faserrohstoff besteht aus dem Presskuchen, der als Prozessnebenprodukt eines Saftherstellungsprozesses entstand. Der Presskuchen beinhaltet die Schale, das Fruchtfleisch, die Kerne und den Restsaft von Beeren. Der Trägerrohstoff besteht aus Mais und weist die Bestandteile des vollen Maiskorns auf, sodass die Kleie, der Keimling und das Endosperm im Trägerrohstoff enthalten ist. Die Rohstoffmischung besteht aus 80 Gew.-% des Faserrohstoffs und aus 20 Gew.-% des Trägerrohstoffs. Aufgrund des Wassergehalts des Faserrohstoffs enthält die Rohstoffmischung 20 Gew.-% Wasser, wodurch die Rohstoffmischung für die Weiterverarbeitung in der Extrusionsmaschine geeignet ist. Eine Hinzugabe von Wasser oder eine Trocknung der Rohstoffmischung ist nicht notwendig. Aufgrund der faserbedingt schlecht fließfähigen Rohstoffmischung und der damit verbundenen hohen Gefahr der Brückenbildung, wird diese über die bewegliche Zuführeinrichtung der Extrusionsmaschine zugeführt. Dabei wird die Rohstoffmischung durch eine oszillierend bewegte Zuführeinrichtung hindurch in die Extrusionsmaschine gefördert, wodurch die Brückenbildung bei der Zufuhr der Rohstoffmischung vermieden wird. Der Extrusionsprozess wird mit einem Einschneckenextruder durchgeführt. Aufgrund des hohen Anteils des Rohstoffs bei gleichzeitig hohem Anteil an Wasser innerhalb der Rohstoffmischung, wird ein Extrudat erzeugt, welches nach Austritt aus der Düse kaum expandiert, sodass ein hartes und feinporiges Extrudat erzeugt wird. Die Düse ist derartig ausgestaltet, dass ein ringförmiges Extrudat hergestellt wird. Im Anschluss an den Extrusionsprozess wird das Extrudat wird weiteren Komponenten veredelt. Das Extrudat wird mit Öl benetzt und zuletzt mit Kochsalz gewürzt. Durch diese Veredelung des Extrudats wird ein schmackhaftes und ansprechendes Lebensmittelprodukt hergestellt.

Figur 1 eine schematische Darstellung einer Zuführeinrichtung zu Zuführung einer Rohstoffmenge in eine Extrusionsmaschine.

In Figur 1 ist eine schematische Darstellung einer Zuführeinrichtung 1 zur Zuführung einer in Figur 1 nicht dargestellten Rohstoffmenge in eine Extrusionsmaschine 2 gezeigt. Die Zuführeinrichtung 1 besteht aus einem Zuführkanalabschnitt 3 mit einer Austrittsöffnung 4 und einem Einfülltrichter 5 mit einer Einfüllöffnung 6. Die Rohstoffmenge tritt aus dem Zuführkanalabschnitt 3 aus und wird über die Einfüllöffnung 6 des Einfülltrichters 5 der Extrusionsmaschine 1 zugeführt. Dabei ist der Zuführkanalabschnitt 3 in der dargestellten Zuführeinrichtung 1 senkrecht orientiert und oberhalb des Zuführtrichters 5 angeordnet. Durch die senkrechte Anordnung kann eine schwerkraftunterstützende Förderung erreicht werden. Die in der Figur 1 dargestellten Ausgestaltung der Zuführeinrichtung 1 sind zwei Stelleinrichtungen 7 im Bereich der Austrittsöffnung 6 am Zuführkanalabschnitt 3 angeordnet. Durch eine derartige Anordnung der zwei Stelleinrichtungen 7 können Stellbewegungen in unterschiedlichen Richtungen senkrecht zur Orientierung des Zuführkanalabschnitts 3 ausgeführt werden, wodurch eine Verlagerung der Austrittsöffnung 4 des Zuführkanalabschnitts 3 erzeugbar ist. Dadurch lässt sich beispielsweise ein relativer Abstand zwischen einer Längsachse 8 des Zuführkanalabschnitts 3 und einer Längsachse 8 des Einfülltrichters 5 erzeugen. Der Einfülltrichter 5 ist an der Extrusionsmaschine 2 befestigt. Der Durchmesser der Einfüllöffnung 6 des Einfülltrichters 5 ist größer als der Durchmesser der Austrittsöffnung 4 des Zuführkanalabschnitts 3, wodurch die maximal zulässige Wegstrecke für die relative Verlagerung des Zuführkanalabschnitts 3 zum Einfülltrichter 5 festgelegt ist, um die aus der Austrittsöffnung 4 des Zuführkanalabschnitts 3 austretende Rohstoffmenge in die Einfüllöffnung 6 des Einfülltrichters 5 zuführen zu können.

### BEZUGSZEICHENLISTE

- 1.: Zuführeinrichtung
- 2.: Extrusionsmaschine
- 3.: Zuführkanalabschnitt
- 4.: Austrittsöffnung
- 5.: Einfülltrichter
- 6.: Einfüllöffnung
- 7.: Stelleinrichtung
- 8.: Längsachse

## Patentansprüche

1. Verfahren zur Verarbeitung einer Rohstoffmischung in einer Extrusionsmaschine zur Herstellung eines Lebensmittelprodukts, wobei die Rohstoffmischung mit einer beweglichen Zuführeinrichtung (1) der Extrusionsmaschine zugeführt wird, wobei durch eine Stellbewegung eines Zuführkanalabschnitts (3) und/oder eines Einfülltrichters (5) der Zuführeinrichtung (1) die Rohstoffmischung an unterschiedlichen Einfüllpositionen innerhalb einer Zuführöffnung einstellbar ist, **dadurch gekennzeichnet, dass** die Rohstoffmischung mit einer bewegten Zuführeinrichtung (1) der Extrusionsmaschine zugeführt wird, sodass die Rohstoffmischung mittels der beweglichen Zuführeinrichtung förderbar gemacht wird und gleichmäßig in die Extrusionsmaschine zugeführt werden kann, wodurch eine gleichbleibende Konsistenz und Zusammensetzung des Extrudats sichergestellt werden kann, wodurch eine besonders gleichmäßige Zuführung der Rohstoffmischung in die Extrusionsmaschine möglich ist, sodass die Rohstoffmischung mittels der Extrusionsmaschine verarbeitbar ist, und dass die Rohstoffmischung einen Faserrohstoff und einen Trägerrohstoff aufweist, wobei der Faserrohstoff ein Prozessnebenprodukt eines Lebensmittelherstellungsprozesses aufweist, und wobei der Trägerrohstoff Bestandteile eines Vollkorngetreides aufweist.

2. Verfahren nach Anspruch 1, **dadurch gekennzeichnet, dass** die Rohstoffmischung 5 Gew.-% bis 80 Gew.-% Faserrohstoff und 1 Gew.-% bis 95 Gew.-% Trägerrohstoff aufweist.

3. Verfahren nach Anspruch 1 und 2, **dadurch gekennzeichnet, dass** der Anteil des Prozessnebenprodukts an dem Faserrohstoff 1 Gew.-% bis 100 Gew.-% beträgt.

4. Verfahren nach einem der voranstehenden Ansprüche, **dadurch gekennzeichnet, dass** das Prozessnebenprodukt pflanzliche Rohstoffe aus Presskuchen, Filterkuchen, Schalen und/oder Treber aufweist.

5. Verfahren nach einem der voranstehenden Ansprüche, **dadurch gekennzeichnet, dass** das Prozessnebenprodukt 5 Gew.-% bis 20 Gew.-% Wasser aufweist.

6. Verfahren nach einem der voranstehenden Ansprüche, **dadurch gekennzeichnet, dass** das Vollkorngetreide ausgewählt ist aus Mais, Reis, Weizen, Gerste, Roggen, Hafer, Dinkel, aus einer anderen Getreidesorte oder einer Kombination daraus.

7. Verfahren nach einem der voranstehenden Ansprüche, **dadurch gekennzeichnet, dass** die Rohstoffmischung mindestens eine weitere Komponente aufweist.

8. Verfahren nach einem der voranstehenden Ansprüche, **dadurch gekennzeichnet, dass** die weitere Komponente ausgewählt ist aus Wasser, Süßungsmitteln, Kochsalz, Fetten und Ölen, funktionellen Inhaltsstoffen, Aromen und Kombinationen daraus.

9. Verfahren nach einem der voranstehenden Ansprüche, **dadurch gekennzeichnet, dass** die der Extrusionsmaschine zugeführte Rohstoffmischung mit einer Einschneckenextrusionsvorrichtung extrudiert wird.

10. Verfahren nach einem der voranstehenden Ansprüche, wobei eine Rohstoffmenge mit der Zuführeinrichtung (1) entlang einer Trajektorie durch die Zuführöffnung in die Extrusionsmaschine (2) zugeführt werden kann, **dadurch gekennzeichnet, dass** die Trajektorie der Rohstoffmenge veränderbar ist, sodass ein Trajektoriendurchtrittswinkel, unter welchem die Trajektorie durch die Zuführöffnung verläuft, und/oder eine Trajektoriendurchtrittsposition, in welcher die Trajektorie durch die Zuführöffnung verläuft, veränderbar ist.

11. Verfahren nach Anspruch 10,
**dadurch gekennzeichnet, dass** der Trajektoriendurchtrittswinkel und die Trajektoriendurchtrittsposition kontinuierlich und/oder diskontinuierlich während der Zuführung der Rohstoffmenge durch die Zuführöffnung veränderbar sind.

12. Verfahren nach Anspruch 11,
**dadurch gekennzeichnet, dass** eine Änderung des Trajektoriendurchtrittswinkels und eine Änderung der Trajektoriendurchtrittsposition in unterschiedlichen Geschwindigkeiten durchführbar sind.

## Claims

1. A method for processing a raw material mixture in an extrusion machine for manufacturing a food product, wherein the raw material mixture is supplied to the extrusion machine by a movable supply unit (1), wherein the raw material mixture is adjustable at different feed positions within a supply opening by an actuating movement of a supply channel portion (3) and/or of a feed hopper (5) of the supply unit (1),
**characterised in that**
the raw material mixture is supplied to the extrusion machine by a moving supply unit (1), such that the raw material mixture is rendered conveyable by the movable supply unit and can be supplied uniformly into the extrusion machine to ensure a consistent texture and composition of the extrudate, thus allowing for a particularly uniform supply of the raw material mixture into the extrusion machine so that the raw material mixture can be processed by the extrusion machine, and the raw material mixture contains a fibre raw material and a carrier raw material, wherein the fibre raw material contains a process by-product of a food manufacturing process, and wherein the carrier raw material contains constituents of a wholegrain cereal.

2. The method according to claim 1,
**characterised in that**
the raw material mixture contains 5 wt.% to 80 wt.% fibre raw material and 1 wt.% to 95 wt.% carrier raw material.

3. The method according to claim 1 and 2,
**characterised in that**
the proportion of the process by-product in the fibre raw material is 1 wt.% to 100 wt.%.

4. The method according to one of the preceding claims,
**characterised in that**
the process by-product contains plant-based raw materials from press cakes, filter cakes, husks and/or spent grains.

5. The method according to one of the preceding claims,
**characterised in that**
the process by-product contains 5 wt.% to 20 wt.% water.

6. The method according to one of the preceding claims,
**characterised in that**
the wholegrain cereal is selected from maize, rice, wheat, barley, rye, oats, spelt, another cereal type or a combination thereof.

7. The method according to one of the preceding claims,
**characterised in that**
the raw material mixture has at least one further component.

8. The method according to one of the preceding claims,
**characterised in that**
the further component is selected from water, sweetening agents, table salt, fats and oils, functional ingredients, flavourings, and combinations thereof.

9. The method according to one of the preceding claims,
**characterised in that**
the raw material mixture supplied to the extrusion machine is extruded with a single-screw extrusion device.

10. The method according to one of the preceding claims,
wherein a raw material quantity can be supplied by the supply unit (1) along a trajectory through the supply opening into the extrusion machine (2),
**characterised in that**
the trajectory of the raw material quantity can be varied, such that a trajectory passage angle at which the trajectory extends through the supply opening, and/or a trajectory passage position in which the trajectory extends through the supply opening, can be varied.

11. The method according to claim 10,
**characterised in that**
the trajectory passage angle and the trajectory passage position are continuously and/or discontinuously variable as the raw material quantity is supplied through the supply opening.

12. The method according to claim 11,
**characterised in that**
a change in the trajectory passage angle and a change in the trajectory passage position can be carried out at different speeds.

## Revendications

1. Procédé de transformation d'un mélange de matières premières dans une machine d'extrusion pour produire un produit alimentaire, dans lequel le mélange de matières premières est amené à la machine d'extrusion avec un système d'alimentation mobile (1), dans lequel le mélange de matières premières peut être réglé sur différentes positions de remplissage à l'intérieur d'une ouverture d'alimentation par un déplacement de réglage d'un tronçon de canal d'alimentation (3) et/ou d'une trémie de remplissage (5) du système d'alimentation (1), **caractérisé en ce que** le mélange de matières premières est amené à la machine d'extrusion avec un système d'alimentation en mouvement (1) si bien que le mélange de matières premières est rendu transportable au moyen du système d'alimentation mobile et peut être amené de manière homogène dans la machine d'extrusion, ce qui permet de garantir une consistance et une composition de l'extrudat uniformes, ce qui rend possible une alimentation particulièrement homogène du mélange de matières premières dans la machine d'extrusion si bien que le mélange de matières premières peut être transformé au moyen de la machine d'extrusion et que le mélange de matières premières présente une matière première à base de fibres et une matière première de support, dans lequel la matière première à base de fibres présente un sous-produit de traitement d'un processus de production de produit alimentaire, et dans lequel la matière première de support présente des composants d'une céréale complète.

2. Procédé selon la revendication 1, **caractérisé en ce que** le mélange de matières premières présente 5 % en poids à 80 % en poids de matière première à base de fibres et 1 % en poids à 95 % en poids de matière première de support.

3. Procédé selon la revendication 1 et 2, **caractérisé en ce que** la fraction du sous-produit de processus en matière première à base de fibres va de 1 % en poids à 100 % en poids.

4. Procédé selon l'une quelconque des revendications précédentes, **caractérisé en ce que** le sous-produit de traitement présente des matières premières végétales composées de gâteaux de pressage, de gâteaux de filtres, de coques et/ou de drêches.

5. Procédé selon l'une quelconque des revendications précédentes, **caractérisé en ce que** le sous-produit de traitement présente 5 % en poids à 20 % en poids d'eau.

6. Procédé selon l'une quelconque des revendications précédentes, **caractérisé en ce que** la céréale complète est choisie parmi le maïs, le riz, le blé, l'orge, le seigle, l'avoine, l'épeautre, parmi un autre type de céréale ou une combinaison de celles-ci.

7. Procédé selon l'une quelconque des revendications précédentes, **caractérisé en ce que** le mélange de matières premières présente un autre composant.

8. Procédé selon l'une quelconque des revendications précédentes, **caractérisé en ce que** l'autre composant est choisi parmi de l'eau, des édulcorants, du sel de cuisine, des matières grasses et des huiles, des ingrédients fonctionnels, des arômes et des combinaisons de ceux-ci.

9. Procédé selon l'une quelconque des revendications précédentes, **caractérisé en ce que** le mélange de matières premières amené à la machine d'extrusion est extrudé avec un dispositif d'extrusion à vis sans fin.

10. Procédé selon l'une quelconque des revendications précédentes, dans lequel une quantité de matières premières peut être amenée avec le système d'alimentation (1) le long d'une trajectoire par l'ouverture d'alimentation dans la machine d'extrusion (2), **caractérisé en ce que** la trajectoire de la quantité de matières premières peut être modifiée si bien qu'un angle moyen de trajectoire, selon lequel la trajectoire s'étend à travers l'ouverture d'alimentation, et/ou une position moyenne de trajectoire, dans laquelle la trajectoire s'étend à travers l'ouverture d'alimentation, peuvent être modifiés.

11. Procédé selon la revendication 10,
**caractérisé en ce que** l'angle moyen de trajectoire et la position moyenne de trajectoire peuvent être modifiés en continu et/ou en discontinu pendant l'amenée de la quantité de matières premières à travers l'ouverture d'alimentation.

12. Procédé selon la revendication 11,
**caractérisé en ce qu'**une modification de l'angle moyen de trajectoire et une modification de la position moyenne de trajectoire peuvent être effectuées à différentes vitesses.
